# EUROPÄISCHE PATENTSCHRIFT

(11) **EP 1 332 789 B1**
(45) Veröffentlichungstag und Bekanntmachung des Hinweises auf die Patenterteilung: **09.04.2008**
(21) Anmeldenummer: 03001016.9
(22) Anmeldetag: 17.01.2003
(51) Int. Cl.: B01D 53/88

(54) **Verfahren zur katalytischen Oxidation eines Gases sowie Rekombinationseinrichtung zur Durchführung des Verfahrens und System mit derartigen Rekombinationseinrichtung**
Method for the catalytic oxidation of gases, recombination device for carrying out said method and system with such a device
Procédé d'oxydation d'un gaz, dispositif de recombination permettant la mise en ouvre de ce procédé et systéme comprenant un tel dispositif

(30) Priorität: 04.02.2002 DE 10204450
(43) Veröffentlichungstag der Anmeldung: 06.08.2003
(73) Patentinhaber: AREVA NP GmbH, 91052 Erlangen (DE)
(72) Erfinder: Eckardt, Bernd, Dipl.-Ing., 63486 Bruchköbel (DE)
(74) Vertreter: Tergau & Pohl Patentanwälte

(56) Entgegenhaltungen:
- DE-A- 4 444 364
- DE-A- 4 444 367
- DE-U- 9 406 155
- US-A- 5 492 686

## Beschreibung

In einer Vielzahl technischer Anlagen kann es bei Fehlfunktionen oder in Störfällen zu einer Freisetzung brennbarer Gase wie beispielsweise Wasserstoff, Tritium oder Kohlenwasserstoffverbindungen kommen. Falls die Konzentration derartiger brennbarer Gase einen substanzspezifischen Schwellwert übersteigt, so können Verbrennungsreaktionen auftreten, die die betriebliche Sicherheit der technischen Anlage gefährden könnten. Insbesondere muss in einer kerntechnischen Anlage bei Stör- oder Unfallsituationen, bei denen beispielsweise auf Grund von Kernaufheizung eine Oxidation von Zirkonium auftreten kann, mit der Freisetzung von Wasserstoffgas und Kohlenmonoxid innerhalb des den Reaktorkern umschließenden Sicherheitsbehälters oder Containments gerechnet werden. Gerade nach einem Kühlmittelverluststörfall können dabei große Mengen an Wasserstoff freigesetzt werden. Dadurch können innerhalb des Containments explosive Gasgemische entstehen. Ohne Gegenmaßnahme ist dabei die Anreicherung von Wasserstoff in der Containment-Atmosphäre soweit möglich, dass bei einer zufälligen Zündung durch die Verbrennung einer größeren Menge an Wasserstoff die Integrität des Sicherheitsbehälters gefährdet sein könnte. Die Containment-Atmosphäre kann dabei mit unter Umständen erheblichen aerosol- oder gasförmigen Aktivitäten belastet sein.

Eine derartige Bildung explosiver Gemische ist beispielsweise beim Leistungsbetrieb von Leichtwasser-Reaktoren denkbar. Alternativ kann bei Siedewasser-Reaktor(SWR)-Anlagen auch eine kontinuierliche Radiolyse-gasbildung im Kern-bereich auftreten. Des Weiteren kann beim Betrieb einer Reaktoranlage mit Wasserstoff-Überschuss im Kühlmittel, beispielsweise zur weitgehenden Vermeidung einer Netto-Radiaolysegasproduktion im Kernbereich eines Druckwasserreaktors (DWR), bei der Entgasung des Kühlmittels zwecks Reduzierung von Edelgasaktivitäten in den Kreisläufen eine Freisetzung eines hochkonzentrierten Wasserstoffgemisches in die Containment-Atmosphäre erfolgen. Ähnlich hoch aufkonzentrierte Reaktionsgase, insbesondere Wasserstoff oder Tritium, können auch bei anderen Prozessen in der kerntechnischen Anlage, wie beispielsweise bei der Entsorgung von Natrium aus Brutreaktoren, durch gezielte Reaktion von Natrium mit Wasser und/oder Kohlendioxid entstehen.

Zur Verhinderung der Bildung explosiver Gasgemische im Containment einer kerntechnischen Anlage aufgrund derartiger Vorgänge werden verschiedene Einrichtungen oder Verfahren diskutiert. Hierzu gehören beispielsweise Einrichtungen wie katalytische Rekombinatoren, katalytisch und/oder elektrisch betriebene Zündeinrichtungen oder die Kombination der beiden vorgenannten Einrichtungen sowie Verfahren einer permanenten oder nachträglichen Inertisierung des Containments. Bei SWR-Anlagen kann dabei ein Einsatz derartiger Systeme im Zusammenhang mit einer ständigen Absaugung im Turbinenkondensatorbereich vorgesehen sein, da die Aufkonzentrierung behandlungsbedürftiger Gase vorwiegend in den Kondensatorbereichen auftritt.

Beim Einsatz eines katalytischen Rekombinators zur Beseitigung des Wasserstoffs aus der Atmosphäre des Containments durch dessen kontrollierte Oxidation unter Zuhilfenahme eines Katalysators soll insbesondere eine frühzeitige und flammenlose Rekombination des Wasserstoffs mit Sauerstoff erreicht werden. Dabei soll ein signifikanter Druckaufbau als Folge einer virulenten Wasserstoffverbrennung sicher vermieden sein. Um diese Vorgabe auch im Hinblick auf die infolge der Rekombinations- oder Oxidationsreaktion üblicherweise freigesetzte Wärme sicher einhalten zu können, sind katalytische Rekombinatoren üblicherweise ausschließlich für die Umsetzung von Gasen mit einem vergleichsweise geringen Anteil an brennbaren Gasen deutlich unterhalb der Zündgrenze, also beispielsweise einem maximalen Anteil des mitgeführten Wasserstoffs von 4 Vol%, ausgelegt. Gerade bei der Auslegung für Störfälle, in denen mit der Freisetzung vergleichsweise großer Mengen an brennbaren Gasen zu rechnen ist, sind daher entsprechend groß dimensionierte und somit aufwändig herstellbare Rekombinationseinrichtungen vorgesehen.

Aus der DE 44 44 364 A ist ein System zur Gasreinigung bekannt, bei dem ein Gasstrom im Umlauf über eine Reaktionszone und über eine mit dieser kommunizierende Rückströmzone geführt wird.

Der Erfindung liegt die Aufgabe zugrunde, ein Verfahren zur katalytischen Oxidation eines Gases anzugeben, mit dem auch für eine zuverlässige Behandlung vergleichsweise großer Gasmengen der erforderliche Aufwand besonders gering gehalten ist. Des Weiteren sollen eine zur Durchführung des Verfahrens besonders geeignete Rekombinationseinrichtung sowie ein System mit einer derartigen Rekombinationseinrichtung angegeben werden.

Bezüglich des Verfahrens wird diese Aufgabe erfindungsgemäß gelöst, indem ein das zu behandelnde Gas umfassender Gasstrom im Umlauf über eine Reaktionszone und über eine mit dieser einlass- und auslassseitig kommunizierende Rückströmzone geführt wird, wobei in der Rückströmzone der Gasstrom in Abwärtsrichtung geführt wird, wobei die Abwärtsströmung durch eine örtliche Sprühkühlung des Gasstroms unterstützt wird.

Die Erfindung geht dabei von der Überlegung aus, dass der erforderliche Aufwand, insbesondere hinsichtlich der Anzahl der erforderlichen Komponenten und deren Dimensionierung, auch für eine zuverlässige Behandlung vergleichsweise großer Mengen des zu behandelnden Gases besonders gering gehalten werden kann, indem die erforderlichen System für eine Bespeisung mit einem Gasstrom ausgelegt sind, der einen vergleichsweise großen Anteil am zu behandelnden Gas aufweisen kann. Insbesondere sollte der Gasstrom statt der bisher üblicherweise zu Grunde gelegten zulässigen Obergrenze für den Wasserstoffanteil von etwa 4 Vol% einen Wasserstoffanteil von beispielsweise bis zu 20 Vol% oder mehr, evtl. sogar bis nahezu 100 Vol %, aufweisen können, ohne eine wirksame und sichere Oxidation oder Rekombination des brennbaren Gasanteils oder Wasserstoffanteils zu beeinträchtigen. Eine Beeinträchtigung der wirksamen Oxidation oder Rekombination könnte dabei insbesondere bei einer sich infolge der hohen Wasserstoffkonzentration einstellenden, vergleichsweise hohen Reaktionstemperatur von beispielsweise mehr als 700 °C auftreten, die zu einer strukturellen Umbildung der den eigentlichen Katalysator bildenden Kristalle oder Kristallite führen könnte. Um eine zuverlässige Begrenzung der Reaktionstemperatur auch bei vergleichsweise hoher Wasserstoffkonzentration zu gewährleisten, ist in der Art einer Verdünnung vorgesehen, den Gasstrom mit dem zu oxidierenden Gas mehrfach durch einen Raumbereich, nämlich eine Reaktionszone, zu führen, in dem die Oxidation oder Rekombination des brennbaren Gases erfolgt. Dazu wird der das zu behandelnde Gas umfassende Gasstrom im Umlauf in einem System geführt, in dem eine Reaktionszone zur Bildung eines Umlauf-Strömungswegs einlass- und auslassseitig mit einer Rückströmzone verbunden ist.

Die Kühlung in der Rückströmzone könnte zwar grundsätzlich mit Flächenkühlern erfolgen, wobei gezielt ein gewünschtes Temperaturniveau eingestellt werden kann, und wobei bedarfsweise eine kombinierte Verwendung mit Heizstäben zur Erreichung einer thermischen Umlaufreaktion erfolgen kann. Nunmehr erfolgt die örtliche Kühlung des Gasstroms jedoch über eine Sprühkühlung. Die Sprühkühlung gerade im Rückströmbereich des Gasstroms unterstützt dabei insbesondere in Kombination mit der in der Reaktionszone konvektiv unterstützten Aufwärtsströmung die Zirkulation oder den Umlauf des Gasstroms, wobei zusätzlich eine Homogenisierung des aus der Reaktionszone abströmenden und somit teilweise behandelten Gasstroms eintritt. Je nach Wahl des bei der Sprühkühlung verwendeten Kühlmittels ist zudem eine Aerosol- oder Jodrückhaltung im Gasstrom durch Konditionierung mit NaOH und/oder Na₂S₂N₃ ermöglicht.

Für eine besonders hohe betriebliche Sicherheit bei der katalytischen Oxidation des Gases sind die hierzu eingesetzten Systeme vorteilhafterweise als passive Systeme ausgebildet, bei denen eine zuverlässige Aufrechterhaltung des Betriebes auch ohne äußere Einflussmaßnahmen und insbesondere ohne äußere Energiezufuhr ermöglicht ist. Dazu wird der das zu behandelnde Gas umfassende Gasstrom vorteilhafterweise in der Reaktionszone in Aufwärtsrichtung geführt, wobei die Aufwärtsströmung konvektiv durch die bei der Oxidationsreaktion freigesetzte Wärme unterstützt oder aufrecht erhalten wird. Dabei ist eine gezielte Nutzung der bei der Oxidationsreaktion freigesetzten Wärme zur Aufrechterhaltung des Gasumlaufs infolge einer Kaminwirkung in der Reaktionszone ermöglicht. Zur weiteren Unterstützung der Gasströmung wird dabei in weiterer vorteilhafter Ausgestaltung eine Gasstrahlpumpeneinrichtung oder ein Ejector verwendet.

Für eine besonders hohe Betriebssicherheit gerade bei der Behandlung eines Gasstroms mit einem vergleichsweise hohen Anteil an brennbarem Gas oder Wasserstoff von beispielsweise 20 Vol% oder mehr ist vorteilhafterweise eine Behandlung des Gasstroms in inertisierter Atmosphäre vorgesehen. Dazu wird zweckmäßigerweise in der Reaktionszone und/oder in der Rückströmzone ein Dampfpartialdruck von mehr als 50% eingestellt, insbesondere da Wasserdampf eine vergleichsweise stark inhibierende Wirkung hat, so dass bereits ein Wasserdampfanteil von 50 - 55 Vol. % ausreicht, um eine Verbrennung von Wasserstoff/Sauerstoff-Gemischen auszuschließen. Die Einstellung des Dampfpartialdrucks erfolgt dabei vorteilhaferweise über eine geregelte Kühlung von unterhalb der Reaktionszone und/oder der Rückströmzone befindlichem Sumpfwasser, das seinerseits als Kühlmittel zur Bespeisung der Sprühdüsen herangezogen wird.

Eine besonders hohe Betriebssicherheit ist zudem erreichbar, indem vorteilhafterweise die Bildung möglicherweise explosiver Gasgemische bereits vor der erstmaligen Einspeisung des Gasstroms in die Reaktionszone konsequent vermieden wird. Dazu wird der Gasstrom vorteilhafterweise vor seinem erstmaligen Eintritt in die Reaktionszone derart mit Dampf versetzt, dass sich ein Dampfgehalt von mehr als 50% einstellt. Alternativ oder zusätzlich wird im Gasstrom vor seinem erstmaligen Eintritt in die Reaktionszone vorteilhafterweise ein Anteil an zu oxidierendem Gas, insbesondere an zu oxidierendem Wasserstoff, von mehr als 6 Vol %, vorzugsweise mehr als 10 Vol %, zweckmäßigerweise von mehr als 50 Vol %, eingestellt.

Die auf die Rekombinationseinrichtung zur katalytischen Oxidation eines Gases gerichtete Aufgabe wird gelöst, indem in einem gemeinsamen Gehäuse eine Reaktionszone und eine Rückströmzone angeordnet sind, die einlass- und auslassseitig derart miteinander kommunizieren, dass ein das zu behandelnde Gas umfassender Gasstrom im Umlauf führbar ist. Dabei ist in der Reaktionszone der Rekombinationseinrichtung eine Anzahl von Katalysatorelementen angeordnet, die die Oxidation oder Rekombination des zu behandelnden Gases einleiten und unterstützen. Um den Umlauf des Gasstroms in der Rekombinationseinrichtung und insbesondere auch die konvektionsgestützte Zirkulation in besonderem Maße zu unterstützen, ist in der Rückströmzone zudem eine Anzahl von mit einem Kühlmittel beaufschlagbaren Sprühdüsen angeordnet.

Die Rekombinationseinrichtung erlaubt somit, das zu behandelnde Gas in mehrfachen Durchläufen durch die Reaktionszone zu führen, wobei der Anteil des zu behandelnden Gases zunehmend abgebaut werden kann. Bei einer Zuspeisung eines noch nicht behandelten Gasstroms erfolgt zunächst eine Vermischung mit dem bereits im Umlauf befindlichen Gasstrom, so dass bereits beim Eintritt des neu zugespeisten Gasstroms zunächst eine Verdünnung des mitgeführten brennbaren Gasanteils eintritt und somit auch die Reaktionstemperatur in der Einrichtung sicher auf einen Wert unterhalb von etwa 500 °C bis 800 °C begrenzt werden kann. Damit ist auch bei einem vergleichsweise großen Anteil des mitgeführten brennbaren Gases ein zuverlässiger Abbau des Gases unter Vermeidung spontaner Zündungen oder einer Bildung explosiver Gasgemische gewährleistet. Die Anordnung der Reaktionszone und der Rückströmzone in einem gemeinsamen Gehäuse erlaubt darüber hinaus, die Rekombinationseinrichtung vergleichsweise gering dimensioniert und dezentral einsetzbar auszugestalten. Somit ist der zielgerichtete Einsatz einer derartigen Rekombinationseinrichtung gerade in lokalen Raumbereichen, in denen in besonderem Maße mit der Freisetzung vergleichsweise großer Mengen des brennbaren Gases zu rechnen ist, ermöglicht.

Die durch die Sprühdüsen ermöglichte Sprükühlung des Gasstroms im Rückströmbereich unterstützt durch die damit verbundene Temperaturabsenkung einerseits die Zirkulation des Gasstroms und trägt andererseits infolge der damit verbundenen Verwirbelungseffekte zu einer Homogenisierung des aus der Reaktionszone abströmenden Gasstroms bei. Bei geeigneter Wahl des Kühlmittels, insbesondere bei Verwendung eines NaOH und/oder Na₂S₂N₃ umfassenden Kühlmittels, ist zudem eine Konditionierung des Gasstroms in der Rückströmzone zur Aerosol- und/oder Jodrückhaltung ermöglicht.

Eine passive Aufrechterhaltung der Umwälzung des Gasstroms innerhalb der Rekombinationseinrichtung im Wesentlichen ohne Zuspeisung externer Energie ist durch Ausnutzung eines Konvektionseffekts infolge einer Kaminwirkung innerhalb der Rekombinationseinrichtung erreichbar. Dazu ist die Reaktionszone vorteilhafterweise von einem innerhalb des Gehäuses angeordneten, konvektiv durchströmbaren Kamin gebildet.

Gerade bei einer vorgesehenen Behandlung von Wasserstoff als brennbarem Gas sind die Katalysatorelemente vorzugsweise auf Platin- oder Palladium-Basis ausgebildet. Zweckmäßigerweise sind die Katalysatorelemente dabei jeweils als Katalysatorplatte mit einer Washcoat-Oberfläche ausgebildet. Derartige Katalysatorelemente umfassen beispielsweise eine Anzahl von metallischen Trägerblechen, auf denen jeweils ein keramisches sogenanntes Washcoat, also ein poröser grobporiger Körper, dessen aktive Oberfläche im Vergleich zur geometrischen Oberfläche um einen Faktor von beispielsweise 1000 vergrößert ist, aufgebracht ist. Bei dem Washcoat sind in diesem Fall in verschiedenen Tiefen die katalytisch aktiven Edelmetalle in Feinkristallen fein verteilt aufgebracht. Um einen hohen Umsetzungsgrad bei der Behandlung des Gases einerseits und eine Durchströmung durch die Reaktionszone bei nur geringem Druckverlust andererseits zu ermöglichen, sind die Katalysatorplatten dabei zweckmäßigerweise mit ihren Erstreckungsebenen im Wesentlichen parallel zueinander und in einem Abstand von etwa 0,5 - 2 cm voneinander angeordnet.

Eine besondere Unterstützung der Zirkulation des Gasstroms in der Rekombinationseinrichtung ist zudem erreichbar, in dem die Einspeisung des Gastroms in die Rekombinationseinrichtung zweckmäßigerweise in der Art einer gerichteten Eindüsung in der vorgesehenen Strömungsrichtung des Gasstroms in der Reaktionszone erfolgt. Dazu ist der Reaktionszone vorteilhafterweise einströmseitig eine Gasstrahlpumpeneinrichtung vorgeschaltet, die mit dem der Rekombinationseinrichtung zuzuführenden Gasstrom beaufschlagbar ist. Die auch als "Ejector" bezeichnete Gasstrahlpumpeneinrichtung weist dabei einen Aussenbereich mit gasstromseitig verengtem Strömungsquerschnitt auf. Der Aussenbereich bewirkt dabei eine Gasbeschleunigung im Gasstrom sowie eine Ansaugung von Umgebungsatmosphäre. Diese Einrichtung könnte auch in der Art einer Venturidüse zur Ansaugung von Flüssigkeiten ausgeführt sein, wobei eine besonders effektive Gasreinigung erzielbar ist.

Um die Einhaltung besonders geringer Restkonzentrationen des zu behandelnden Gases im aus der Rekombinationseinrichtung abströmenden Gasstrom zu ermöglichen, ist in deren Gehäuse vorteilhafterweise eine katalytische Nachreinigungsstufe integriert, die auslassseitig mit einem Abgassystem verbunden ist. Durch die katalytische Nachreinigungsstufe ist vor einer Abführung des behandelten Gasstroms an das Abgassystem noch eine gezielte Nachbearbeitung ermöglicht, durch die beispielsweise Restwerte für den Wasserstoffanteil im behandelten Gasstrom von weniger als 0,1 Vol% erreichbar sind.

Die Nachreinigungsstufe kann als vollkeramischer Schüttbettkatalysator, beispielsweise bestehend aus Kugeln oder Pellets, oder als auf keramische Platten aufgebrachter Katalysator ausgebildet sein.

Um eine besonders wirksame Nachbehandlung des abzuführenden Gasstroms zu ermöglichen, umfasst die Nachreinigungsstufe vorteilhafterweise eine Anzahl von Katalysatorplatten, die in einem besonders gering gehaltenen Abstand von etwa 0,2 - 1 cm voneinander angeordnet sind. Eine besonders wirksame Nachbehandlung des abzuführenden Gasstroms ist zudem erreichbar, indem die Nachreinigungsstufe vorzugsweise über eine Kühleinheit mit dem Abgassystem verbunden ist. Die Kühleinheit kann dabei insbesondere als Kühlschlange ausgebildet sein, die der Nachreinigungsstufe auslassseitig nachgeschaltet ist. Gerade bei der Verwendung von Sprühdüsen im Rückströmbereich der Rekombinationseinrichtung ist eine derartige Kühlschlange vorzugsweise sekundärseitig mit dem aus den Sprühdüsen austretenden Kühlmittel beaufschlagbar.

In weiterer vorteilhafter Ausgestaltung ist die Nachreinigungsstufe der Rekombinationseinrichtung elektrisch oder durch den umgebenden Katalysator beheizbar ausgebildet. Gerade in der Kombination mit einer Reaktionszone ist somit ein Betrieb der Rekombinationseinrichtung bei erhöhten Betriebstemperaturen ermöglicht, so dass hohe Reaktionsraten erreichbar sind.

Ein besonders zuverlässiger Betrieb der Rekombinationseinrichtung auch bei der Behandlung eines Gasstroms mit einem vergleichsweise hohen Anteil an zu behandelndem Gas wie beispielsweise 20 Vol% oder mehr ist ermöglicht, indem eine Vorinertisierung des der Rekombinationseinrichtung zuströmenden Gasstroms vorgesehen ist. Dazu ist die Rekombinationseinrichtung vorteilhafterweise in einem System zur katalytischen Oxidation eines Gases eingesetzt, das eine der Rekombinationseinrichtung gasstromseitig vorgeschaltete Dampfstrahlereinheit umfasst. Über die Dampfstrahlereinheit ist dabei die Beaufschlagung des der Rekombinationseinrichtung zuströmenden Gasstroms mit Dampf derart ermöglicht, dass sich ein Dampfgehalt von 50 Vol% oder mehr einstellt. In einem derartig vorbehandelten Gasstrom ist die Bildung eines zündfähigen Gemisches selbst bei einem vergleichsweise hohen Anteil des brennbaren Gases sicher ausgeschlossen, so dass auch bei einer Einspeisung des Gasstroms direkt in die vergleichsweise heiße Reaktionszone eine Zündgefahr sicher vermieden ist.

In alternativer oder zusätzlicher vorteilhafter Ausgestaltung ist der Rekombinationseinrichtung innerhalb des Systems zur katalytischen Oxidation eines Gases eine Aktivkohleverzögerungsstrecke nachgeschaltet. Ein derartiges System ermöglicht eine kombinierte Gasbehandlung und Aktivitätsrückhaltung, so dass insbesondere ein Einsatz für eine vergleichsweise hoch belastete Containmentatmosphäre einer kerntechnischen Anlage auch nach vergleichsweise schwer wiegenden Störfällen zuverlässig und mit hohem Wirkungsgrad ermöglicht ist. Hierbei kann vorteilhafterweise eine vorlaufende Inertgaseinspeisung in die Aktivkohleversorgungsstrecke, beispielsweise aus Stickstoffflaschen, vorgesehen sein, so dass ein weitgehend sauerstofffreier Absorbtionsbetrieb ermöglicht ist und somit selbst beim Anfall erheblicher Nachzerfallswärme eine Entzündung der Aktivkohle sicher vermieden ist.

Die mit der Erfindung erzielten Vorteile bestehen insbesondere darin, dass durch die Führung des Gasstroms im Umlauf ein mehrfaches Durchströmen der Reaktionszone und somit eine katalytische Oxidation oder Rekombination des zu behandelnden Gasanteils in mehreren aufeinanderfolgenden Schritten erfolgen kann. Bei der Zuspeisung des noch gänzlich unbehandelten Gasstroms in diesen Umlauf erfolgt zunächst eine Verdünnung durch die Einleitung in den zumindest teilweise bereits behandelten Gasstrom. Dadurch ist insgesamt eine hohe Abbaurate des zu behandelnden Gases erreichbar, wobei auch bei einer Beaufschlagung mit einem vergleichsweise hoch belasteten Gasstrom eine spontane Zündung des brennbaren Gases sicher vermieden ist. Dadurch ist die Behandlung eines Gasstroms auch mit einem vergleichsweise hohen Anteil an brennbarem Gas wie beispielsweise 20 Vol% oder mehr ermöglicht, ohne dass die Reaktionstemperatur über einen für einen zuverlässigen Betrieb des Katalysatorsystems einzuhaltenden Grenzwert hinaus ansteigt.

Durch die Nutzung der Kaminwirkung in der Reaktionszone über eine konvektiv aufrecht erhaltene oder unterstützte Strömung, insbesondere in Kombination mit der Kühlung des Gasstroms im Rückströmbereich und unterstützt durch den Einströmejector oder die Gasstrahlpumpeneinrichtung, ist ohne Rückgriff auf externe Energiezufuhr in der Art einer passiven Ausgestaltung eine intensive Umwälzung des Gasstroms erreichbar, so dass eine vergleichsweise hohe Abbaurate des Anteils an brennbarem Gas ermöglicht ist. Bei geeigneter Dimensionierung der dazu eingesetzten Rekombinationseinrichtung ist beispielsweise eine interne Umwälzrate herstellbar, die dem Fünffachen des Prozessgasvolumenstroms entspricht und somit eine signifikante Reduktion des Anteils an brennbarem Gas in der Rekombinationseinheit auf beispielsweise ein Fünftel ermöglicht. Bei geeigneter Dimensionierung ist insbesondere eine intensive interne Umwälzung des in der Rekombinationseinrichtung insgesamt befindlichen Gasvolumens innerhalb weniger Sekunden, beispielsweise weniger als fünf Sekunden, möglich.

Durch die Kombination der Reaktions-, der Rückström- oder Kühlzone und der Intertisierungszone in einem gemeinsamen Gehäuse sowie die passive Erzeugung und Aufrechterhaltung des Umwälzstroms ist auch für eine Behandlung vergleichsweise großer Mengen an brennbarem Gas der erforderliche apparative Aufwand besonders gering gehalten. Insbesondere kann durch die Umwälzung des Gasstroms in der Rekombinationseinrichtung deren Kapazität auch bei vergleichsweise geringer Dimensionierung und somit vergleichsweise geringem Materialaufwand besonders hoch gehalten sein. Hinsichtlich der Dimensionierung ist dabei im Vergleich zu bekannten Anlagen eine Verkleinerung der Einrichtungen oder Komponenten um einen Faktor 2 bis 5 ermöglicht. Eine derartig kompakte Bauweise ist insbesondere auch dadurch ermöglicht, dass die Zufuhr des unbehandelten Gasstroms zur Rekombinationseinrichtung mit nur geringer Verdünnung oder sogar vollständig ohne Verdünnung durch ein Trägergas möglich ist, da die Rekombinationseinrichtung die Verarbeitung eines Gasstroms mit hohem Anteil behandlungsbedürftigem Gases erlaubt.

Gerade bei einem beispielsweise ständig im Leistungsbetrieb betriebenen SWR ermöglicht eine Kombination der Rekombinationseinrichtung mit einer dem Turbinenkondensator zugeordneten Evakuierungseinrichtung, vorzugsweise einem Dampfstrahler mit Zwischenkondensator oder einem Wasserringpumpensystem mit Verdünnungsdampfeinspeisung direkt nach der Verdichtung, eine Reduzierung des Verdünnungsdampfes um einen Faktor bis zu etwa 5. Bei dieser Betriebsweise ist somit eine beträchtliche Dampfeinsparung und daher ein besonders hoher Gesamtwirkungsgrad der Reaktoranlage erreichbar, wobei zudem auch eine massive Verkleinerung der Komponenten - also eine besonders kompakte Bauweise - ermöglicht ist. Durch die interne Zirkulation in der Reaktionseinrichtung erfolgt dann die Verdünnung und anschließend die Oxidation bei begrenzten Reaktionstemperaturen.

Bei der Kühlmittelentgasung einer DWR-Anlage kann durch das Verfahren das hochkonzentrierte Eintrittsgas, zum Zweck der Förderung bedarfsweise lediglich geringfügig verdünnt, mit einer erheblichen Wasserstoffkonzentration direkt in die Rekombinationseinrichtung eingeleitet werden. In diesem Anwendungsfall kann die Wasserstoffoxidation im internen Zirkulationskreis anschließend an eine Sauerstoffeinspeisung und ohne weitere Inertgaszuspeisung erfolgen. In diesem Fall können zudem die austretenden, nur geringfügig verdünnten Edelgasaktivitäten in eine nachfolgende Aktivkohleanlage eingeleitet werden, wobei aufgrund der verbleibenden geringen Gasströme eine vergleichsweise klein gehaltene Aktivkohleverzögerungsstrecke vorgesehen sein kann.

Ein Ausführungsbeispiel der Erfindung wird anhand einer Zeichnung näher erläutert. Darin zeigen:
- Fig. 1: eine Rekombinationseinrichtung zur katalytischen Oxidation eines Gases,
- Fig. 2: ein System zur katalytischen Oxidation eines Gases mit einer Rekombinationseinrichtung nach Fig. 1, und
- Fig. 3: ein alternatives System zur katalytischen Oxidation eines Gases mit einer Rekombinationseinrichtung nach Fig. 1.

Gleiche Teile sind in allen Figuren mit den selben Bezugszeichen versehen.

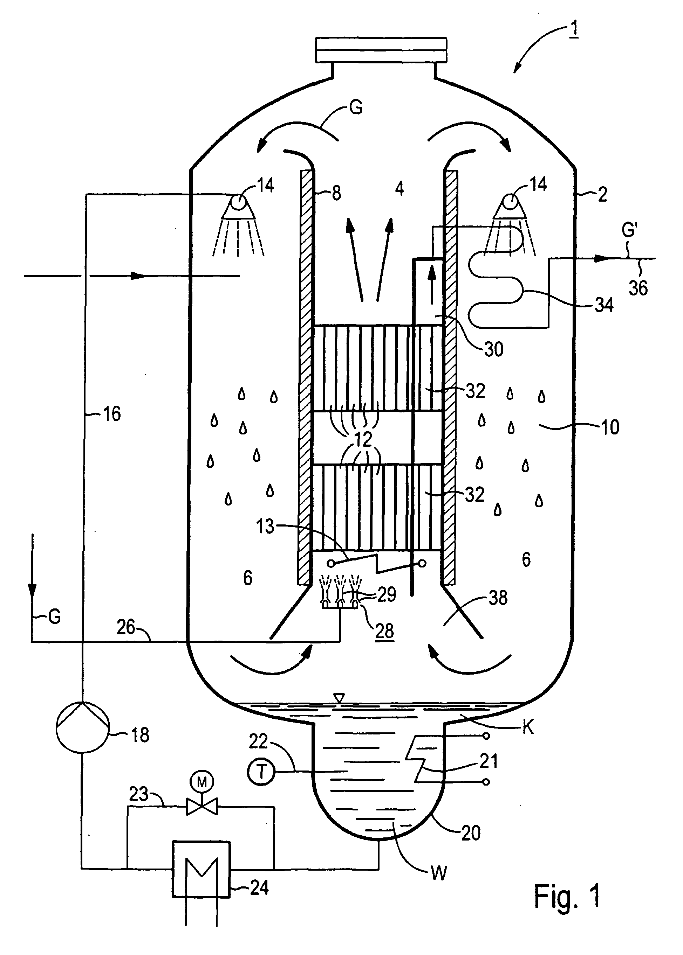

Die Rekombinationseinrichtung 1 nach Fig. 1 ist zur katalytischen Oxidation - auch als Rekombination bezeichnet - eines brennbaren Gases, im Ausführungsbeispiel Wasserstoff, ausgelegt. Die Rekombinationseinrichtung 1 ist dabei derart ausgestaltet, dass bei hoher betrieblicher Sicherheit auch eine zuverlässige Behandlung eines Gasstroms G ermöglicht ist, der einen vergleichsweise hohen Anteil an zu behandelndem Wasserstoff von beispielsweise 20V% oder mehr mitführt.

Um dies zu ermöglichen, ist die Rekombinationseinrichtung 1 für eine Führung des Gasstroms G im Umlauf in ihrem Innenraum ausgelegt. Dazu umfasst die Rekombinationseinrichtung 1 ein Gehäuse 2, innerhalb dessen sowohl eine Reaktionszone 4 als auch eine mit der Reaktionszone 4 einlass- und auslassseitig miteinander kommunizierende Rückströmzone 6 angeordnet sind. Im Ausführungsbeispiel weist die Rekombinationseinrichtung 1 entlang ihrer Längsachse im Wesentlichen eine Zylindersymmetrie auf, es können jedoch auch andere geeignete Geometrien gewählt sein.

Im Ausführungsbeispiel ist das Gehäuse 2 in seinem überwiegendem Bereich zylindermantelförmig ausgestaltet. Innerhalb des Gehäuses 2 ist in zentrierter Anordnung ein Zylindermantel 8 angeordnet, der die Reaktionszone 4 seitlich begrenzt und durch seine lang gestreckte Ausgestaltung einen Kamin bildet. Die Rückströmzone 6 ist dabei im Ausführungsbeispiel durch den vom zylindermantelförmigen Bereich des Gehäuses 2 und dem Zylindermantel 8 begrenzten Ringraum 10 gebildet. Die durch den Zylindermantel 8 zeitlich begrenzte Reaktionszone 4 kommuniziert dabei gasseitig sowohl einlass- als auch auslassseitig über entsprechende Überströmbereiche mit dem die Rückströmzone 6 bildenden Ringraum 10, so dass eine Umwälzung oder ein Umlauf des Gasstroms G durch Reaktionszone 4 und Rückströmzone 6 ermöglicht ist.

In der vom Zylindermantel 8 begrenzten, in der Art eines Kamins ausgestalteten Reaktionszone 4 ist eine Anzahl von Katalysatorelementen 12 angeordnet. Die Katalysatorelemente 12 sind dabei jeweils zur Unterstützung einer Rekombinationsreaktion von Wasserstoff mit Sauerstoff zur Wasser ausgebildet und umfassen jeweils im Wesentlichen eine katalytisch aktive Oberfläche auf Platin- oder Palladium-Basis. Die Katalysatorelemente 12 sind dabei jeweils als Katalysatorplatten ausgebildet, die zur Bereitstellung einer vergleichsweise großen katalytisch aktiven inneren Oberfläche als Washcoat ausgestaltet sind. Die Trägerplatte jeder Katalysatorplatte kann dabei aus geeignetem, beispielsweise aus keramischem oder metallischem, Material gewählt sein.

Die Rekombinationseinrichtung 1 ist für eine Führung des Gasstroms G im Umlauf vorgesehen, wobei die Zirkulation in der Art eines passiven Systems durch die Kaminwirkung innerhalb des Zylindermantels 8 konvektiv unterstützt oder aufrechterhalten wird. Dabei wird der Gasstrom G im Bereich der Reaktionszone 4 in Aufwärtsrichtung und im Bereich der Rückströmzone 6 in Abwärtsrichtung geführt. Dabei ist die Nutzung der auf Grund der exothermen Reaktion bei der katalytischen Oxidation des Wasserstoffs an den Katalysatorelementen 12 freiwerdenden Wärme zur Unterstützung oder Aufrechterhaltung der Zirkulation vorgesehen.

Um diese konvektiv unterstützte oder aufrechterhaltene Gasströmung geeignet zu ermöglichen, sind die Katalysatorelemente 12 in ihrer Gesamtheit für einen vergleichsweise gering gehaltenen Strömungswiderstand bei gleichzeitig vergleichsweise groß gehaltener katalytisch aktiver Oberfläche ausgestaltet. Dazu sind im Ausführungsbeispiel die als Katalysatorplatten ausgestalteten Katalysatorelemente 12 in zwei Stufen jeweils in ihren Plattenebenen im Wesentlichen parallel zueinander angeordnet und etwa 1 cm und somit zwischen 0,5 und 2 cm voneinander beabstandet angeordnet, so dass der von den Katalysatorelementen 12 jeweils gebildete Stapel einen nur vergleichsweise geringen Druckverlust für den zirkulierenden Gasstrom G bewirkt. In Strömungsrichtung des Gasstroms G innerhalb des Zylindermantels 8 gesehen sind im Ausführungsbeispiel zwei Stapel der Katalysatorelemente 12 hintereinander angeordnet. Die Katalysatorelemente 12 sind dabei jeweils derart dimensioniert, dass ihre jeweilige Katalysatorhöhe mindestens 5% der Kaminhöhe, also der Höhe des Zylindermantels 8, beträgt.

Zur bedarfweisen Unterstützung der konvektiv aufrechterhaltenen Aufwärtsströmung innerhalb der Reaktionszone 4 sowie zur initialen Trocknung und Temperierung des Katalysators ist der Reaktionszone 4 gasstromseitig, also in ihrem unteren Raumbereich, eine Heizeinrichtung 13 vorgeschaltet. Diese kann insbesondere in kaltem Betriebszustand der Anlage, also beispielsweise während des Anfahrens, zur Förderung der konvektiv getriebenen Aufwärtsströmung und/oder zum Start der katalytischen Reaktion herangezogen werden.

Zur weiteren Unterstützung der Zirkulation oder Umwälzung des Gasstroms G innerhalb der Rekombinationseinrichtung 1 ist eine Kühlung des in der vom Ringraum 10 gebildeten Rückströmzone 6 geführten Gasstroms G vorgesehen. Die Kühlung könnte dabei mittels in der Rückströmzone 6 angeordneter Oberflächenkühler erfolgen. Im Ausführungsbeispiel ist jedoch innerhalb des Ringraums 10 und somit innerhalb der Rückströmzone 6 eine Anzahl von Sprühdüsen 14 angeordnet, die über eine Zuleitung 16 mit einem Kühlmittel K beaufschlagbar sind. Im Ausführungsbeispiel ist die Zuführungsleitung 16, in die eine Förderpumpe 18 geschaltet ist, eingangsseitig mit einer im Bodenbereich der Rekombinationseinrichtung 1 angeordneten Sumpfwanne 20 verbunden. In der Sumpfwanne 20 sammelt sich dabei beim Betrieb der Rekombinationseinrichtung 1 Sumpfwasser W an, das seinerseits über die Zuführleitung 16 als Kühlmittel K für die Sprühdüsen 14 verwendbar ist.

Zur Einstellung geeigneter Betriebsparameter für das Kühlmittel K ist die Sumpfwanne 20 mit einer Heizeinrichtung 21 und mit einer Temperaturmesseinrichtung 22 versehen. In die Zuführleitung 16 ist weiterhin ein bedarfsweise über eine Bypassleitung 23 umführbarer Wärmetauscher 24 geschaltet, über den eine Rückkühlung des Kühlmittels K ermöglicht ist. Zusätzlich kann die Verwendung des den Sprühdüsen 14 zugeführten Kühlmittels K zur Konditionierung des Gasstroms G innerhalb der Rückströmzone 6 vorgesehen sein. Dabei könnte beispielsweise die Zuspeisung von NaOH und/oder Na₂S₂N₃ in die Zuleitung 16 vorgesehen sein. In diesem Fall ist an die Zuführleitung 16 eine in Fig. 1 nicht dargestellte Einspeiseleitung angeschlossen.

Um die Zirkulation oder Umwälzung des Gasstroms G innerhalb der Rekombinationseinrichtung 1 noch weiter zu begünstigen, ist die Einspeisung des noch unbehandelten Gasstroms G in die Reaktionszone 4 unter vergleichsweise hohem Druck und in der gewünschten Strömungsrichtung innerhalb der Reaktionszone 4, also in Aufwärtsrichtung, vorgesehen. Dazu mündet eine Einspeiseleitung 26 für den Gasstrom G innerhalb des Gehäuses 2 in einen zur Reaktionszone 4 eingangsseitig geeignet positionierten Ejector 28. Der als Gasstrahlpumpeneinrichtung vorgesehene Ejector 28 umfasst dabei eine Anzahl von gasstromseitig parallel geschalteten und geeignet ausgerichteten Sprühdüsen 29, in denen auf Grund einer geeignet gewählten Querschnittsverkleinerung eine geeignet hohe Austrittsgeschwindigkeit des Gasstroms G in die Reaktionszone 4 hinein eingestellt wird.

Für die Einhaltung besonders geringer Restgrenzwerte hinsichtlich der Konzentration des im aus der Rekombinationseinrichtung 1 abströmenden, behandelten Gasstrom G' noch mitgeführten Restanteils an brennbarem Gas von beispielsweise weniger als 0,1 Vol% ist in das Gehäuse 2 eine katalytische Nachreinigungsstufe 30 integriert. Die Nachreinigungsstufe 30 ist im Ausführungsbeispiel innerhalb der Reaktionszone 4 angeordnet und durch eine geeignete Anordnung von Wandblechen begrenzt. Durch diese räumliche Anordnung erfolgt in der Art eines passiven Systems eine Beheizung der Nachreinigungsstufe 30 durch die Reaktionszone 4 und die in dieser freigesetzte Reaktionswärme. Dadurch stellt sich selbsttragend ein vergleichsweise hohes, für die katalytische Umgebung günstiges Temperaturniveau in der Nachreinigungsstufe 30 ein, so dass ein besonders hoher Umsetzungs- oder Wirkungsgrad gegeben ist. Innerhalb der Nachreinigungsstufe 30 ist eine Anzahl von ebenfalls jeweils als Katalysatorplatten ausgebildeten Katalysatorelementen 32 angeordnet, die ebenfalls eine vergleichsweise große katalytisch aktive innere Oberfläche in der Art einer Washcoat-Ausführung auf Platin- oder Palladium-Basis aufweisen. Die Katalysatorelemente 32 sind jedoch im Vergleich zu den Katalysatorelementen 12 vergleichsweise eng beabstandet zueinander angeordnet und weisen einen mittleren Abstand von etwa 0,5 cm auf.

Auslass- oder ausgangsseitig ist die Nachreinigungsstufe 30 über eine Kühleinheit 34 mit einem Abgassystem 36 verbunden. Die Kühleinheit 34 ist dabei als Kühlschlange ausgestaltet, die räumlich innerhalb des Ringraums 10 derart nahe bei einer der Sprühdüsen 14 positioniert ist, dass über das aus diesen Sprühdüsen 14 austretende Kühlmittel K eine wirksame Kühlung der Kühleinheit 34 sichergestellt ist.

Beim Betrieb der Rekombinationseinrichtung 1 strömt der das zu behandelnde oder zu oxydierende Gas umfassende Gasstrom G dem einlassseitigen oder unteren Ende der Reaktionszone 4 zu. Von dort aus überströmt der Gasstrom G die innerhalb der Reaktionszone 4 angeordneten Katalysatorelemente 12. Durch den Kontakt mit dem katalytisch aktiven Material, insbesondere Platin oder Palladium, an der Oberfläche der Katalysatorelemente 12 findet eine zumindest teilweise Umsetzung des im Gasstrom G mitgeführten Anteils an zu behandelndem oder zu oxydierendem Gas, also im Ausführungsbeispiel an Wasserstoff, statt. Der Wasserstoff wird dabei mit dem verfügbaren Sauerstoff unter Bildung von Wasser oxydiert. Die bei dieser Umsetzung freiwerdende Wärme bewirkt eine lokale Aufheizung im Bereich der Katalysatorelemente 12. Auf Grund dieser Aufheizung entsteht eine konvektive Gasströmung in Aufwärtsrichtung, die durch die kaminartige Ausbildung der die Reaktionszone 4 begrenzenden Zylindermantels 8 in besonderem Maße für die Unterstützung oder Aufrechterhaltung der Aufwärtsströmung im Inneren der Reaktionszone 4 genutzt wird.

Das infolge dessen am auslassseitigen Ende der Reaktionszone 4 austretende Gasgemisch G strömt in den den Zylindermantel 8 umgebenden, die Rückströmzone 6 bildenden Ringraum 10 und durchströmt diesen in Abwärtsrichtung. Beim Eintritt in die Rückströmzone 6 wird der Gasstrom G über die Sprühdüsen 14 mit dem Kühlmittel K beaufschlagt und somit einerseits gekühlt und andererseits bei geeigneter Wahl des Kühlmittels K bedarfsweise konditioniert. Die Kühlung des Gasstroms G in diesem Bereich bewirkt eine zusätzliche Unterstützung der ohnehin abwärtsgerichteten Gasströmung. Im unteren Bereich der Rückströmzone 6 tritt der Gasstrom G wiederum in den Einströmbereich der Reaktionszone 4 über, so dass ein im Wesentlichen geschlossener Umlauf entsteht.

Durch diese Zirkulation oder diesen Umlauf wird der Gasstrom G mehrfach über die Katalysatorelemente 12 geführt, so dass - gegebenenfalls unter dosierter Zugabe eines Reaktionsgases wie beispielsweise Sauerstoff - ein sukzessiver Abbau oder eine sukzessive Behandlung des mitgeführten Anteils an brennbaren Gasen ermöglicht ist, wobei die Reaktionstemperatur infolge des eintretenden Verdünnungseffekts auf einen für die Funktionsfähigkeit der katalytisch aktiven Komponenten unbedenklichen Wert von beispielsweise weniger als etwa 400 °C bis 800 °C begrenzt ist. Weiterhin wird über die Einspeiseleitung 26 ein noch völlig unbehandelter Gasstrom G eingedüst, der sich im Eintrittsbereich der Reaktionsszone 4 mit dem aus dem Rückströmbereich 6 zurückströmenden Gasstrom G vermischt. Durch diese Vermischung erfolgt bereits eine Verdünnung des im neu zuströmenden Gasstrom G mitgeführten Anteils an brennbarem Gas, so dass selbst bei einem vergleichsweise hohen mitgeführten Anteil an Wasserstoff von beispielsweise 20 Vol% oder mehr die Reaktionstemperatur innerhalb der Reaktionszone 4 begrenzt bleibt. Die Zuspeisung des noch unbehandelten Gasstroms G über den Ejector 28 trägt dabei zusätzlich zur Erhaltung der Zirkulation oder Umwälzung innerhalb der Rekombinationseinrichtung 1 bei.

Bei vergleichsweise hohem Gastreibdruck ist auch eine Ausrichtung der Durchströmungsrichtung der Reaktionszone 4 in horizontaler Richtung möglich, wobei die Gaszirkulation über den Ejector 28 aufrechterhalten wird.

In gleichem Maße, wie über die Einspeiseleitung 26 eine Zuführung des noch völlig unbehandelten Gasstroms G erfolgt, wird ein Gasstrom G' bereits behandelten Gases aus der Rekombinationseinrichtung 1 abgezogen. Dazu wird eine Teilmenge des in die Reaktionszone 4 eintretenden, in der Rekombinationseinrichtung 1 bereits zirkulierenden Gasstroms G über die Einströmöffnung 38 in die Nachreinigungsstufe 30 eingeleitet. Der bereits in Zirkulation befindliche Gasstrom G weist dabei bereits einen vergleichsweise geringen Restanteil an zu behandelndem Gas oder Wasserstoff auf, so dass beim nunmehr abzuführenden Teil dieses Gastroms G' eine zuverlässige Nachbehandlung mit dem Ziel einer Einstellung einer Restkonzentration an Wasserstoff von weniger als 0,1 % möglich ist. Dazu wird der abgezweigte Teil des Gasstroms G' über die in der Nachreinigungsstufe 30 angeordneten Katalysatorelemente 32 entsprechend nachbehandelt, so dass eine zuverlässige und weitgehende Restumsetzung des bislang noch verbliebenen Wasserstoffanteils gewährleistet ist. Der von der Nachreinigungsstufe 30 abströmende Gasstrom G' wird anschließend über die Kühleinheit 34 geleitet, wobei die Einstellung einer geeigneten Abgastemperatur vorgenommen wird. Anschließend wird der nunmehr behandelte Gasstrom G' dem Abgassystem 36 zugeführt, wobei bedarfsweise noch eine Nachentfeuchtung des Abgases, beispielsweise mittels Kühlern, vorzugsweise Kaltwasserkühlern, vorgenommen werden kann.

Bei diesem Betrieb der Rekombinationseinrichtung 1 entsteht durch die Umsetzung von Wasserstoff mit Sauerstoff Prozesswasser. Des Weiteren bildet das über die Sprühdüsen 14 eingebrachte Kühlmittel K Tropfen, wie dies in Fig. 1 schematisch angedeutet ist. Diese Tropfen sowie das gebildete Prozesswassser sammeln sich im Bodenbereich der Rekombinationseinrichtung 1 und bilden dort den Wassersumpf in der Sumpfwanne 20. Über das im Wassersumpf befindliche Sumpfwasser W wird zur Gewährleistung einer besonders hohen betrieblichen Sicherheit durch bedarfsweise geregelte Kühlung oder Beheizung im Innenraum des Gehäuses 2 ein Dampfpartialdruck von mehr als 50% eingestellt. Damit ist sichergestellt, dass in jedem Fall eine ausreichende Inertisierung der Atmosphäre innerhalb des Gehäuses 2 eingehalten wird, so dass eine ungewollte spontane Zündung des Gases im Gasstrom G sicher vermieden ist. Selbst bei möglicherweise auftretender fehlerhafter Zuspeisung eines Gasstroms G mit einem Anteil des brennbaren Gases in an sich unzulässiger Höhe wird dadurch eine Bildung eines explosiven Gasgemischs sicher ausgeschlossen. Die zur Einstellung des gewünschten Dampfpartialdrucks erforderliche Temperierung des Sumpfwassers W kann einerseits durch direkte Beheizung oder Kühlung des Wassersumpfes oder andererseits auch über eine geeignete Kühlung des Sumpfwasserstroms in der Zuführleitung 16, also einem geeigneten Betrieb des Wärmetauschers 24 und/oder eine geeignete teilweise Umführung des Wärme-tauschers 24 über die Bypassleitung 22, erfolgen. Die Regelung und der Betrieb bei der Einspeisung des Kühlmittels K oder des Sumpfwassers erfolgt dabei vorzugsweise durch eine frei programmierbare Steuerung, so dass die wichtigen Anlagen- und Betriebsparameter gegebenenfalls unter Rückgriff auf gewonnene Erfahrungswerte als Funktion vorgegeben werden können.

Bedarfsweise kann zur Aufrechterhaltung einer zuverlässigen Rekombinationsreaktion die Zuspeisung von Sauerstoff als Reaktionspartner vorgesehen sein. Diese Einspeisung erfolgt abhängig von aktuell gewonnen Messwerten für die einschlägigen Gaskonzentrationen ebenfalls über eine frei progammierbare Steuerung. Die Regelung der Reaktionsgas- oder Sauerstoffeinspeisung kann dabei beispielsweise in Abhängigkeit von der Reaktionstemperatur und der Wasserstoff- und/oder Sauerstoffkonzentration am Gasaustritt erfolgen. Bei Druckentlastungsbetrieb kann durch eine Regelung der Sauerstoff-Austrittskonzentration eine Sauerstoffkonzentration von weniger als 4 Vol % sichergestellt werden, so dass ein sicherer Betrieb einer nachgeschalteten Aktivkohleverzögerungsstrecke auch bei erheblicher Nachzerfallswärme unter Vermeidung von Oxidationsreaktionen in der Aktivkohle gewährleistet ist.

Die Rekombinationseinrichtung 1 ist auf Grund ihrer grundsätzlichen Eignung auch für die Behandlung eines Gasstroms G mit einem vergleichsweise hohen Anteil an mitgeführten zu behandelnden Gasen von beispielsweise 20 Vol % oder mehr besonders gut für einen Einsatz in einer kerntechnischen Anlage geeignet. Insbesondere kann dieser Einsatz infolge der vergleichsweise kompakten Bauweise und durch die kombinierte Integration der Reaktionszone 4, der Kühlung des Gasstroms G sowie einer bedarfsweise bereitstellbaren Inertisierung in einem einzigen Gehäuse 2 besonders bedarfsgerecht gezielt an Orten erfolgen, in denen in besonderem Maße mit der Freisetzung vergleichsweise großer Mengen behandlungsbedürftiger Gase zu rechnen ist. Die Flexibilität bei der Einsetzbarkeit der Rekombinationseinrichtung 1 sowie deren Leistungsfähigkeit und Kapazität können bedarfsweise noch gesteigert werden durch einen Gleitdruck- und Gleittemperaturbetrieb.

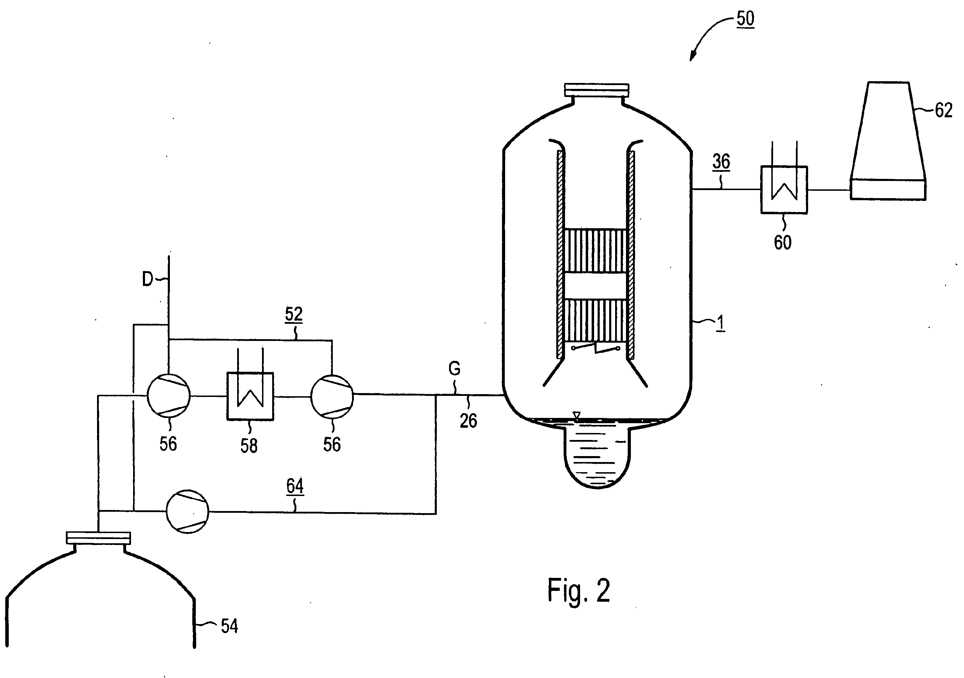

Eine besonders kompakte Bauweise bei hoher Kapazität bei der Behandlung behandlungsbedürftiger Gase ist erreichbar, indem die Rekombinationseinrichtung 1 - wie in Fig. 2 dargestellt - in einem System 50 zur katalytischen Oxydation eines Gases geeignet mit einer Dampfstrahlereinheit 52 kombiniert ist. Das System 50 ist dabei im Ausführungsbeispiel nach Fig. 2 einem dort nur auszugsweise dargestellten Turbinenkondensator 54 zugeordnet. Der Turbinenkondensator 54 ist ausgangsseitig über die Einspeiseleitung 26 mit der Rekombinationseinrichtung 1 verbunden. In der Einspeiseleitung 26 ist der Rekombinationseinrichtung 1 die Dampfstrahlereinheit 52 vorgeschaltet. Die Dampfstrahlereinheit 52 umfasst dabei zwei in der Einspeiseleitung 26 in Serie geschaltete Dampfinjektoren 56, die jeweils mit Einspeisedampf D beaufschlagt sind. Zwischen die Dampfinjektoren 56 ist im Ausführungsbeispiel ein Zwischenkühler 58 geschaltet, der eine bedarfsweise Temperaturanpassung ermöglicht.

Ausgangsseitig ist die Rekombinationseinrichtung 1 im System 50 über einen Trockner 60 mit einem Abgaskamin 62 verbunden, die beide Teil des Abgassystems 36 sind. Die Dampfstrahlereinheit 52 ist bedarfsweise über ein Wasserringpumpensystem 64 umführbar.

Die Anordnung im System 50 ermöglicht eine Vorinertisierung des der Rekombinationseinrichtung 1 zuströmenden Gasstroms G bereits in der Einspeiseleitung 26. Dabei kann bedarfsweise über die Dampfstrahlereinheit 52 eine Zuspeisung von Dampf D derart erfolgen, dass bereits im der Rekombinationseinrichtung 1 zuströmenden Gasstrom G ein Dampfgehalt von mehr als 50% eingehalten ist, so dass der Gasstrom G bereits dampfinertisiert ist. Das System 50 ist insgesamt somit mit vergleichsweise sehr hohen Wasserstoffkonzentrationen im zuströmenden Gasstrom G beaufschlagbar, ohne dass Beeinträchtigungen der Betriebssicherheit in Kauf zu nehmen sind. Daher ist gerade bei der Bauweise gemäß dem System 50 zum zuverlässigen Abbau der erwartungsgemäß möglicherweise anfallenden Wasserstoffmengen im Vergleich zu bisherigen Systemen eine signifikante Verkleinerung der Einrichtungen und Komponenten um einen Faktor von 2 bis 5 möglich. Eine noch weitere Verkleinerung, insbesondere der Dampfstrahlereinheit 52, ist erreichbar, indem die Rekombinationseinrichtung 1 unmittelbar am Austritt des Turbinenkondensators 54 noch in dessen Unterdruckbereich angeordnet ist.

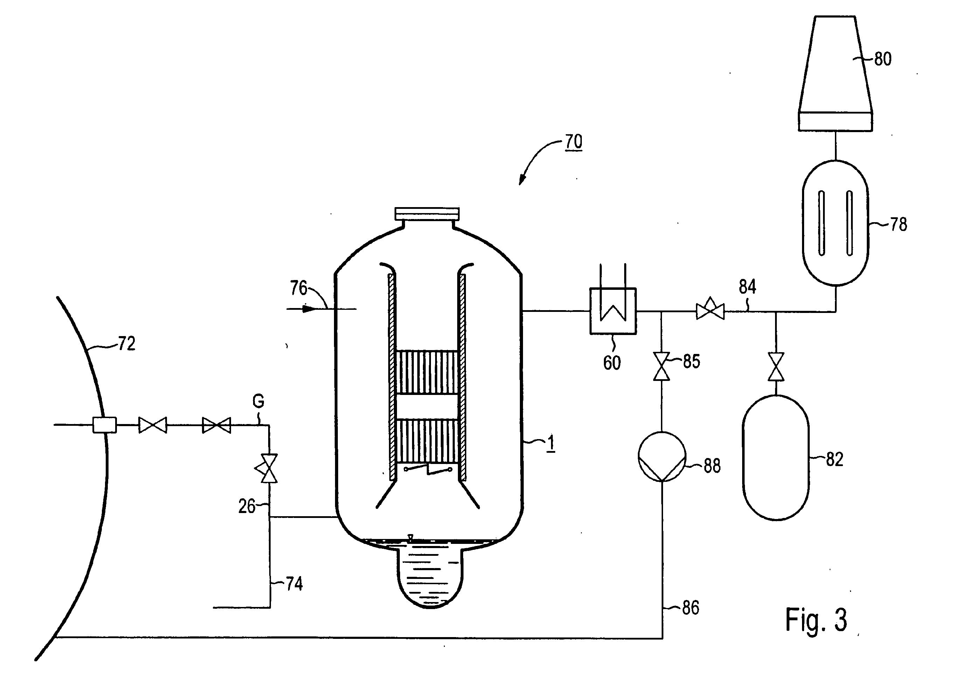

Im Ausführungsbeispiel gemäß Fig. 3 ist die Rekombinationeinrichtung 1 Teil eines Systems 70 zur katalytischen Oxydation eines Gases, das insbesondere auf eine zuverlässige Gasbehandlung und Aktivitätsrückhaltung einer hoch belasteten Containment-Atmosphäre auch nach vergleichsweise schweren Störfällen ausgelegt ist. Dazu ist das System 70 im Ausführungsbeispiel nach Fig. 3 an den Sicherheitsbehälter 72 oder das Containment einer Kernkraftwerksanlage angeschlossen. Dabei ist der Sicherheitsbehälter 72 über Containmentabschlußarmaturen und Regelarmaturen unmittelbar mit der Einströmleitung 26 in der Rekombinationseinrichtung 1 verbunden. Bedarfsweise kann an die Einströmleitung 26 noch eine weitere Zweigleitung 74 zur Zuführung behandlungsbedürftiger Gase aus anderen Quellen angeschlossen sein.

Bei einem besonders schweren Störfall innerhalb des Sicherheitsbehälters 72 kann eine besonders stark erhöhte Wasserstoffkonzentration von beispielsweise 20 bis 50 Vol % auftreten. Ein derartig stark belasteter Gasstrom G kann ohne Einschränkung der betrieblichen Sicherheit der Rekombinationseinrichtung 1 zugeführt werden, insbesondere wenn diese im inertisierten Betriebsmodus bereitgehalten wird. In diesem Fall erfolgt die Oxydation des mitgeführten Wasserstoffs innerhalb der Rekombinationseinrichtung 1 in mehreren Umläufen, wobei bedarfsweise über die Einspeisungsleitung 76 Sauerstoff als Reaktionspartner zugeführt wird. Über eine geeignete Wahl des Kühlmittels K erfolgt in diesem Fall ebenfalls eine Konditionierung des in der Rekombinationseinrichtung 1 zirkulierenden Gasstroms G, so dass eine Rückhaltung der Jod- und Aerosolbestandteile in der Kühlflüssigkeit erfolgt.

Ausgangsseitig ist die Rekombinationseinrichtung 1 im System 70 über eine Aktivkohleverzögerungsstrecke 78 mit einem Abgaskamin 80 verbunden. In der Aktivkohleverzögerungsstrecke 78, die bedarfsweise zuvor mittels in einem Vorratstank 82 vorgehaltenem Stickstoff vorinertisiert worden sein kann, erfolgt eine weitere Rückhaltung möglicherweise noch vorhandener Edelgasaktivitäten.

Des weiteren ist die Rekombinationseinrichtung 1 im System 70 ausgangsseitig über eine von der Verbindungsleitung 84 zur Aktivkohleverzögerungsstrecke 78 abzweigende, durch eine Armatur 85 absperrbare Rezirkulationsleitung 86, in die eine Antriebspumpe 88 geschaltet ist, wieder an das Containment 72 angeschlossen. Somit ergibt sich ein geschlossener Rezirkulationskreislauf von Containment 72, Rekombinationseinrichtung 1 und Rezirkulationseinrichtung 86, über den Atmosphäre aus dem Containment 72 bedarfsweise im Umlauf führbar ist. Durch diesen Aufbau ist somit bedarfsweise eine Behandlung von Atmosphäre aus dem Containment 72 möglich, ohne dass eine Freisetzung von Abgasen an die Umgebung erfolgen müsste, so dass je nach Einsatzfall auch eine Vorbehandlung von Gasanteilen aus dem Containment 72 vorgenommen werden kann.

Selbstverständlich ist auch eine kombinierte Ausführung wesentlicher Komponenten der Systeme 50, 70 nach den Figuren 2 und 3 denkbar. So kann beispielsweise das System 50 ebenfalls geeignet mit einer Aktivkohleverzögerungsstrecke 78 und/oder mit einer Rezirkulationsleitung 86 geeignet versehen sein.

### Bezugszeichenliste

- 1: Rekombinationseinrichtung
- 2: Gehäuse
- 4: Reaktionszone
- 6: Rückströmzone
- 8: Zylindermantel
- 10: Ringraum
- 12: Katalysatorelemente
- 13: Heizeinrichtung
- 14: Sprühdüsen
- 16: Zuleitung
- 18: Förderpumpe
- 20: Sumpfwanne
- 21: Heizeinrichtung
- 22: Temperaturmesseinrichtung
- 23: Bypassleitung
- 24: Wärmetauscher
- 26: Einspeiseleitung
- 28: Ejector
- 29: Sprühdüsen
- 30: Nachreinigungsstufe
- 32: Katalysatorelemente
- 34: Kühleinheit
- 36: Abgassystem
- 38: Einströmöffnung
- 50: System
- 52: Dampfstrahlereinheit
- 54: Turbinenkondensator
- 56: Dampfinjektoren
- 58: Zwischenkühler
- 60: Trockner
- 62: Abgaskamin
- 64: Wasserringpumpensystem
- 70: System
- 72: Sicherheitsbehälter
- 74: Zweigleitung
- 76: Einspeiseleitung
- 78: Aktivkohleverzögerungsstrecke
- 80: Abgaskamin
- 82: Vorratstank
- 84: Verbindungsleitung
- 85: Armatur
- 86: Rezirkulationsleitung
- 88: Antriebspumpe

- D: Dampf
- G, G': Gasstrom
- K: Kühlmittel
- W: Sumpfwasser

## Patentansprüche

1. Verfahren zur katalytischen Oxidation eines Gases, bei dem ein Gasstrom (G) im Umlauf über eine Reaktionszone (4) und über eine mit dieser einlass- und auslassseitig kommunizierende Rückströmzone (6) geführt wird, wobei der Gasstrom (G) in der Rückströmzone (6) in Abwärtsrichtung geführt wird, wobei die Abwärtsströmung durch örtliche Sprühkühlung des Gasstroms (G) unterstützt wird.

2. Verfahren nach Anspruch 1, bei dem der Gasstrom (G) in der Reaktionszone (4) in Aufwärtsrichtung geführt wird, wobei die Aufwärtsströmung konvektiv durch bei der Oxidationsreaktion freigesetzte Wärme unterstützt oder aufrechterhalten wird.

3. Verfahren nach Anspruch 1 oder 2, bei dem die Strömung des Gasstroms (G) durch einen Ejector (28) unterstützt wird.

4. Verfahren nach einem der Ansprüche 1 bis 3, bei dem in der Reaktionszone (4) und/oder in der Rückströmzone (6) ein Dampfpartialdruck von mehr als 50% eingestellt wird.

5. Verfahren nach Anspruch 4, bei dem der Dampfpartialdruck über eine geregelte Kühlung von unterhalb der Reaktionszone (4) und/oder der Rückströmzone (6) befindlichem Sumpfwasser (W) eingestellt wird.

6. Verfahren nach einem der Ansprüche 1 bis 5, bei dem der Gasstrom (G) vor seinem erstmaligen Eintritt in die Reaktionszone (4) derart mit Dampf (D) versetzt wird, dass sich ein Dampfgehalt von mehr als 50% einstellt.

7. Verfahren nach einem der Ansprüche 1 bis 6, bei dem im Gasstrom (G) vor seinem erstmaligen Eintritt in die Reaktionszone (4) eine Konzentration des zu oxidierenden Gasanteils von mehr als 6 Vol%, vorzugsweise mehr als 50 Vol%, eingestellt wird.

8. Rekombinationseinrichtung (1) zur katalytischen Oxidation eines Gases, bei der in einem gemeinsamen Gehäuse (2) eine Reaktionszone (4) mit einer Anzahl von Katalysatorelementen (12) und eine Rückströmzone (6) angeordnet sind, die einlass- und auslassseitig derart miteinander kommunizieren, dass ein Gasstrom (G) im Umlauf führbar ist, wobei in der Rückströmzone (6) eine Anzahl von mit einem Kühlmittel (K) beaufschlagbaren Sprühdüsen (14) angeordnet ist.

9. Rekombinationseinrichtung (1) nach Anspruch 8, deren Reaktionszone (4) von einem konvektiv durchströmbaren Kamin gebildet ist.

10. Rekombinationseinrichtung (1) nach Anspruch 8 oder 9, deren Katalysatorelemente (12) jeweils als Katalysatorplatte mit einer Washcoat-Oberfläche auf Platin- oder Palladium-Basis ausgebildet sind, die in einem Abstand von etwa 0,5 bis 2 cm voneinander angeordnet sind.

11. Rekombinationseinrichtung (1) nach einem der Ansprüche 8 bis 10, deren Reaktionszone (4) einströmseitig ein Ejector (28) vorgeschaltet ist.

12. Rekombinationseinrichtung (1) nach einem der Ansprüche 8 bis 11, in deren Gehäuse (2) eine katalytische Nachreinigungsstufe (30) integriert ist, die auslassseitig mit einem Abgassystem (36) verbunden ist.

13. Rekombinationseinrichtung (1) nach Anspruch 12, deren Nachreinigungsstufe (30) über eine Kühleinheit (34) mit dem Abgassystem (36) verbunden ist.

14. Rekombinationseinrichtung (1) nach Anspruch 12 oder 13, in deren Nachreinigungsstufe (30) eine Anzahl von Katalysatorplatten angeordnet sind, die in einem Abstand von etwa 0,2 bis 1 cm voneinander angeordnet sind.

15. Rekombinationseinrichtung (1) nach einem der Ansprüche 12 bis 14, deren Nachreinigungsstufe als konvektiv durchströmbarer Kamin ausgebildet ist.

16. System (50) zur katalytischen Oxidation eines Gases mit einer Rekombinationseinrichtung (1) nach einem der Ansprüche 8 bis 15, der eine Dampfstrahlereinheit (52) vorgeschaltet ist.

17. System (70) zur katalytischen Oxidation eines Gases mit einer Rekombinationseinrichtung (1) nach einem der Ansprüche 8 bis 15, der eine Aktivkohleverzögerungsstrecke (78) nachgeschaltet ist.

## Claims

1. Method for the catalytic oxidation of a gas, wherein a gas stream (G) is led in circulation through a reaction zone (4) and through a backflow zone (6) communicating with it on the inlet and outlet sides, the gas stream (G) being led in downward direction in the backflow zone (6), the downward flow being assisted by a local spray cooling of the gas stream (G).

2. Method according to claim 1, wherein the gas stream (G) is led in upward direction in the reaction zone (4), the upward flow being assisted or maintained by convection generated by the heat released by the oxidation reaction.

3. Method according to claim 1 or 2, wherein the gas stream (G) is assisted by an ejector (28).

4. Method according to any of claims 1 to 3, wherein a steam partial pressure of more than 50 % is adjusted in the reaction zone (4) and/or in the backflow zone (6).

5. Method according to claim 4, wherein the steam partial pressure is adjusted by means of a controlled cooling of sump water (W) located below the reaction zone (4) and/or the backflow zone (6).

6. Method according to any of claims 1 to 5, wherein the gas stream (G), before entering the reaction zone (4) for the first time, is mixed with steam (D) in such a way that the steam content becomes more than 50 %.

7. Method according to any of claims 1 to 6, wherein a concentration of the gas share to be oxidized of more than 6 % by volume, preferably of more than 50 % by volume, is adjusted in the gas stream (G), before it enters the reaction zone (4) for the first time.

8. Recombination device (1) for the catalytic oxidation of a gas, wherein a reaction zone (4) with a number of catalyzer elements (12) and a backflow zone (6) are arranged, which communicate on the inlet and outlet sides in such a way that a gas stream (G) can be led in circulation, a number of spraying nozzles (14), which can be charged with a coolant (K), being arranged in the backflow zone (6).

9. Recombination device (1) according to claim 8, whose reaction zone (4) is formed by a chimney which can be flowed through by convection.

10. Recombination device (1) according to claim 8 or 9, whose catalyzer elements (12) are formed as catalyzer plates having a washcoat surface based on platinum or palladium and being spaced by approx. 0.5 to 2 cm.

11. Recombination device (1) according to any of claims 8 to 10, wherein an ejector (28) is arranged upstream of the reaction zone (4), on the inlet side.

12. Recombination device (1) according to any of claims 8 to 11, into whose housing (2) a catalytic post-cleaning stage (30) is integrated, which is connected on the outlet side with an exhaust gas system (36).

13. Recombination device (1) according to claim 12, whose post-cleaning stage (30) is connected through a cooling unit (34) with the exhaust gas system (36).

14. Recombination device (1) according to claim 12 or 13, in whose post-cleaning stage (30) a number of catalyzer plates are arranged, which are spaced approx. 0.2 to 1 cm.

15. Recombination device (1) according to any of claims 12 to 14, whose post-cleaning stage (30) is formed by a chimney which can be flowed through by convection.

16. System (50) for the catalytic oxidation of a gas with a recombination device (1) according to any of claims 8 to 15, upstream of which a steam jet unit (52) is arranged.

17. System (70) for the catalytic oxidation of a gas with a recombination device (1) according to any of claims 8 to 15, downstream of which an activated-carbon delay loop (78) is arranged.

## Revendications

1. Procédé pour l'oxydation catalytique d'un gaz, dans lequel un courant de gaz (G) est conduit en circulation à travers une zone de réaction (4) et à travers une zone de reflux (6) communicant avec elle des côtés d'entrée et de sortie, le courant de gaz (G) étant conduit en direction vers le bas dans la zone de reflux (6), le flux vers le bas étant assisté par un refroidissement par arrosage local du courant de gaz (G).

2. Procédé selon la revendication 1, dans lequel le courant de gaz (G) est conduit en direction vers le haut dans la zone de réaction (4), le flux vers le haut étant assisté ou maintenu par la convection générée par la chaleur dégagée par la réaction d'oxydation.

3. Procédé selon la revendication 1 ou 2, dans lequel le courant de gaz (G) est assisté par un éjecteur (28).

4. Procédé selon l'une quelconque des revendications 1 à 3, dans lequel une pression partielle de vapeur de plus de 50 % est réglée dans la zone de réaction (4) et/ou dans la zone de reflux (6).

5. Procédé selon la revendication 4, dans lequel la pression partielle de vapeur est réglée au moyen d'un refroidissement contrôlé d'eau de puisard (W) situé au-dessous de la zone de réaction (4) et/ou de la zone de reflux (6).

6. Procédé selon l'une quelconque des revendications 1 à 5, dans lequel le courant de gaz (G), avant d'entrer dans la zone de réaction (4) pour la première fois, est mélangé avec de la vapeur (D), de façon que la teneur en vapeur devient plus de 50%.

7. Procédé selon l'une quelconque des revendications 1 à 6, dans lequel une concentration de la part du gaz à oxyder de plus de 6 % volumétrique, préférablement de plus de 50 % volumétrique, est réglée dans le courant de gaz (G), avant qu'il entre dans la zone de réaction (4) pour la première fois.

8. Dispositif de recombinaison (1) pour l'oxydation catalytique d'un gaz, dans lequel une zone de réaction (4) avec un nombre d'éléments catalytiques (12) et une zone de reflux (6) sont arrangés, qui communiquent des côtés d'entrée et de sortie, de façon qu'un courant de gaz (G) peut être conduit en circulation, un nombre de buses de pulvérisation (14), qui peuvent être alimentées d'un réfrigérant (K), étant amenagées dans la zone de reflux (6).

9. Dispositif de recombinaison (1) selon la revendication 8, dont la zone de réaction (4) est formée par une cheminée qui peut être traversée par convection.

10. Dispositif de recombinaison (1) selon la revendication 8 ou 9, dont les éléments catalytiques (12) sont formés en tant que plaques catalytiques aying une surface "washcoat" à base de platine ou de palladium et étant espacées d'environ 0,5 à 2 cm.

11. Dispositif de recombinaison (1) selon l'une quelconque des revendications 8 à 10, dans lequel un éjecteur (28) est arrangé en amont de la zone de réaction (4), du côté d'entrée.

12. Dispositif de recombinaison (1) selon l'une quelconque des revendications 8 à 11, dans le boîtier (2) duquel est intégré un étage de nettoyage ultérieur (30) catalytique, qui est connecté du côté de sortie avec un système de gaz d'échappement (36).

13. Dispositif de recombinaison (1) selon la revendication 12, dont l'étage de nettoyage ultérieur (30) est connecté avec le système de gaz d'échappement (36) par une unité de refroidissement (34).

14. Dispositif de recombinaison (1) selon la revendication 12 ou 13, dans l'étage de nettoyage ultérieur (30) duquel est arrangé un nombre de plaques catalytiques espacées d'environ 0,2 à 1 cm.

15. Dispositif de recombinaison (1) selon l'une quelconque des revendications 12 à 14, dont l'étage de nettoyage ultérieur (30) est formé par une cheminée qui peut être traversée par convection.

16. Système (50) pour l'oxydation catalytique d'un gaz avec un dispositif de recombinaison (1) selon l'une quelconque des revendications 8 à 15, en amont duquel est arrangé une unité de jet de vapeur (52).

17. Système (70) pour l'oxydation catalytique d'un gaz avec un dispositif de recombinaison (1) selon l'une quelconque des revendications 8 à 15, en aval duquel est arrangé un système réglé de retardement à charbon activé (78).
